# EUROPEAN PATENT APPLICATION

(11) **EP 3 798 822 A1**
(43) Date of publication of application: **31.03.2021**
(21) Application number: 20193201.9
(22) Date of filing: 27.08.2020
(51) Int. Cl.: G06F 8/658

(54) **SYSTEM AND METHOD FOR BLOCK AND DELTA BASED UPDATE**

(30) Priority: 27.09.2019 EP 19200175
(71) Applicant: Argus Cyber Security Ltd, 6789155 Tel Aviv (IL)
(72) Inventor: Briskin, Alexander - c/o Continental Automotive GmbH, 65824 Schwalbach a. Ts. (DE); Roth, Gilad - c/o Continental Automotive GmbH, 65824 Schwalbach a. Ts. (DE)
(74) Representative: Continental Corporation

(57) **Abstract**

A system and method for creating a software update object may include logically, at file level, comparing a first file including a current software version with a second file including an updated software version; recording at least one offset of a respective at least one difference between first and second data blocks in the first and second files; creating a digital object that includes two or more data blocks of the first file such that the physical order of the data blocks, in the digital object, is according to a predefined mapping function applied to a logical order of data blocks in the first file; and creating an update object based on the at least one offset and based the physical order.

## Description

### FIELD OF THE INVENTION

The present invention relates generally to creating an updated software version. More specifically, the present invention relates to combining file level and file system level operations in creating an updated software package.

### BACKGROUND OF THE INVENTION

Updating software or firmware in, or of, a target device (e.g., an internet of things (IoT) device or an electronic control unit (ECU) included in a car, boat and/or airplane) typically includes creating an updated software object and replacing a current software object in the target device with the updated software object.

Typically, e.g., in order to avoid sending an entire updated software object and/or storing the entire updated software object in the target device, delta (or patch) files are used to record differences between current and updated software objects and modifications to the current software object are applied, in the target device, using information in the patch or delta file.

To identify differences between current and updated software objects, known systems and methods compare these two objects and create a patch file based on such differences. However, a comparison of files does not take into account the distribution of content of files over blocks of a file system, e.g., the distribution of an image across physical blocks of a file system in a storage system of the target device.

Accordingly, known systems and methods for updating devices that use block-based file systems are inefficient. Moreover, protected file systems (filesystems) may only be updated by writing blocks of data and thus require block level operations when updating them.

### SUMMARY OF THE INVENTION

An embodiment for creating a software update object may include logically, at file level, comparing a first file including a current software version with a second file including an updated software version. An embodiment may record at least one offset of a respective at least one difference between first and second data blocks in the first and second files. A recorded offset may be related to a difference between one of: payload in the first and second files, file system level data, and cyber security information.

An embodiment may create a digital object (DO) that includes two or more data blocks of the first file wherein the physical order of the data blocks, in the DO, is according to a predefined mapping function applied to a logical order of data blocks in the first file and the embodiment may create an update object based on the at least one offset and based the physical order.

Creating an update object may include selecting, based on one or more recorded offsets, one or more blocks of the DO; and including the selected blocks in the update object. Creating an update object may include mounting a first file such that it is accessible as a filesystem and applying at least one modification to the content in the mounted first file according to the at least one offset. An embodiment may provide an update object as an updated software package to a target device. Other aspects and/or advantages of the present invention are described herein.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 shows a system according to illustrative embodiments of the present invention;
Fig. 3 shows a system according to illustrative embodiments of the present invention;
Fig. 4 illustrates views of a content object;
Fig. 5 illustrates arrangement of data blocks in a digital object according to illustrative embodiments of the present invention.
Fig. 6 illustrates arrangement of data in a digital object according to illustrative embodiments of the present invention;
Fig. 7 shows a flow of a method according to illustrative embodiments of the present invention; and
Fig. 8 shows a flow of a method according to illustrative embodiments of the present invention.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

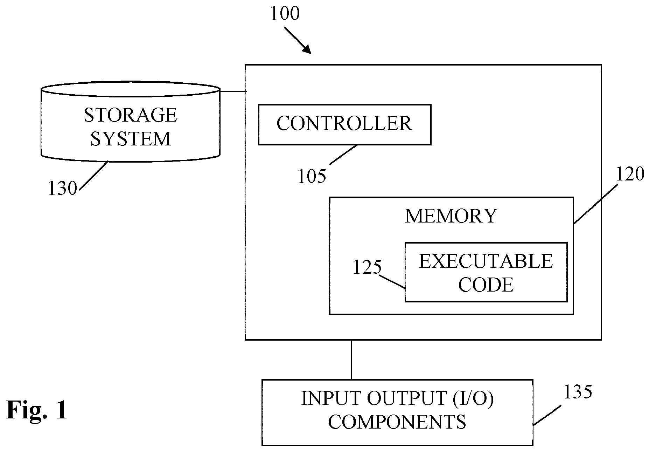

Reference is made to Fig. 1, showing a non-limiting, block diagram of a computing device or system 100 that may be used by, or included in, a system according to some embodiments of the present invention. Computing device (or system) 100 may include a controller 105 that may be a hardware controller. For example, computer hardware processor or hardware controller 105 may be, or may include, a central processing unit processor (CPU), a chip or any suitable computing or computational device. Computing system 100 may include a memory 120, executable code 125, a storage system 130 and input/output (I/O) components 135. Controller 105 (or one or more controllers or processors, possibly across multiple units or devices) may be configured (e.g., by executing software or code) to carry out methods described herein, and/or to execute or act as the various modules, units, etc., for example by executing software or by using dedicated circuitry. More than one computing device 100 may be included in, and one or more computing devices 100 may be, or act as the components of, a system according to some embodiments of the invention.

Memory 120 may be a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different memory units. Memory 120 may be a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 may be software, an application, a program, a process, task or script. A program, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein.

Executable code 125 may be executed by controller 105 possibly under control of an operating system. For example, executable code 125 may be an application, e.g., in a server, that generates or creates software update objects and/or executable code 125 may be an application, e.g., in a device being updated, that uses software update objects to update software or firmware objects to update a device as further described herein. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein. For example, servers, devices, units or modules described herein, may be, or may include, controller 105, memory 120 and executable code 125. Computing systems discussed herein such as servers or devices being updated may include components such as in Fig. 1.

Storage system 130 may be or may include, for example, a hard disk drive, a universal serial bus (USB) device, a flash memory or unit or any other suitable removable and/or fixed storage unit. In some embodiments, some of the components shown in Fig. 1 may be omitted. For example, storage system 130 may be a non-volatile memory (e.g., a flash memory) included in memory 120. Accordingly, although shown as a separate component, storage system 130 may be embedded or included in system 100, e.g., in memory 120.

I/O components 135 may be, may include, or may be used for connecting (e.g., via included ports): a mouse; a keyboard; a touch screen or pad or any suitable input device. I/O components may include one or more screens, touchscreens, displays or monitors, speakers and/or any other suitable output devices. Any applicable I/O components may be connected to computing device 100 as shown by I/O components 135, for example, a wired or wireless network interface card (NIC), a universal serial bus (USB) device or an external hard drive may be included in I/O components 135.

A system according to some embodiments of the invention may include components such as, but not limited to, a plurality of central processing units (CPU) or any other suitable multipurpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units (e.g., memory 120 may include a flash memory and a RAM), and a plurality of storage units. A system may additionally include other suitable hardware components and/or software components. In some embodiments, a system may include or may be, for example, a server computer, a network device and any number of target or remote devices, e.g., internet of things (IoT) devices, electronic control units (ECUs) in a vehicle, e.g., ECUs included in a car, a boat or an airplane.

The terms "binary" and "image" as used in this application refer to software and possibly additional data used for operating a computing device, for example, an image may be sent from a server to a remote device where it may be used or executed by a controller on the remote device.

The terms "target device", "remote machine" and "remote device" as used in this application refer to a computing device that is being updated. For example, a target or remote device can be an ECU or an IoT device. The terms "target device", "remote machine" and "remote device" as referred to herein may mean the same thing and may be used interchangeably herein.

The terms "data block" or simply "block" as used in this application refer to an amount of digital information of data as known and used in the art. For example, blocks are used when referring to storage or memory, e.g., a flash memory may be designed to store data in blocks, e.g., blocks can be 512 bytes. The terms "data block" and "block" as referred to herein may mean the same thing and may be used interchangeably herein.

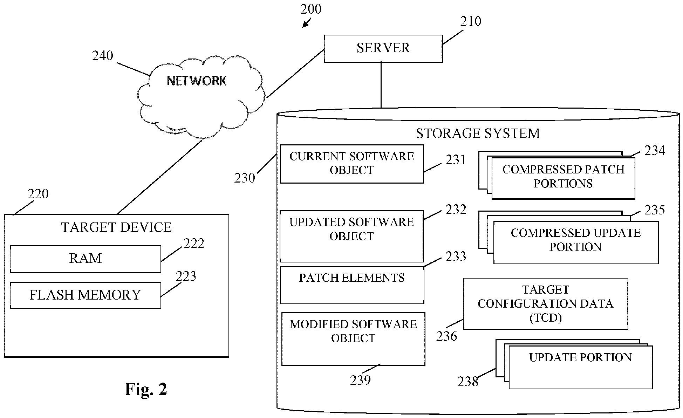

Reference is made to Fig. 2, a system 200 according to some embodiments of the present invention. As shown, system 200 may include a server 210 and a target device 220. As shown, target device 220 may include a RAM 222 that may be, or may include components as described with respect to memory 120. As further shown, target device 220 may include a flash memory 223. While flash memory is mainly described or referred to herein, it will be understood that any electronic, non-volatile computer storage medium adapted to store digital data and/or be electrically erased and reprogrammed may be used instead of, or in addition to, flash memory 223.

System 200 or components of system 200 may include components such as those shown in Fig. 1. For example, server 210 and target device 220 may be, or may include, a controller 105, a memory 120 and executable code 125. As further shown, system 200 may include, or be operatively connected to a network 240.

Network 240 may be any suitable network that enables server 210 and target device 220 to communicate or exchange digital information. Network 240 may be, may comprise or may be part of a private or public IP network, or the internet, or a combination thereof. Additionally, or alternatively, network 240 may be, comprise or be part of a global system for mobile communications (GSM) network. For example, network 240 may include or comprise an IP network such as the internet, a GSM related network and any equipment for bridging or otherwise connecting such networks as known in the art. In addition, network 240 may be, may comprise or be part of an integrated services digital network (ISDN), a public switched telephone network (PSTN), a public or private data network, a local area network (LAN), a metropolitan area network (MAN), a wide area network (WAN), a wireline or wireless network, a local, regional, or global communication network, a satellite communication network, a cellular communication network, any combination of the preceding and/or any other suitable communication means. Accordingly, numerous elements of network 240 are implied but not shown, e.g., access points, base stations, communication satellites, GPS satellites, routers, telephone switches, etc. It will be recognized that embodiments of the invention are not limited by the nature of network 240.

As shown, server 210 may be operatively connected (e.g., directly or over a network) to storage system 230. Storage system 230 may be similar to, or include components of, storage system 130, for example, storage system 230 may be a hard disk or a network storage device or system. As further shown, storage system 230 may include a current software object 231, a modified software object 239 (that may be a modified or updated software version intended to replace a current software object 231), an updated software object 232, target configuration data (TCD) 236, one or more patch elements 233, one or more update portion objects 238, one or more compressed patch elements or portions 234 and one or more compressed update portions 235 (collectively referred to hereinafter as update portions 238, compressed update portions 235, patch elements 233 and/or compressed patch portions 234 or individually as update portion 238, compressed update portion 235, patch element 233 and/or compressed patch portion 234, merely for simplicity purpose). Where applicable, the terms "portion", "chunk", "segment", "fragment" or "part" as used herein may mean the same thing and may be used interchangeably, e.g., any one of a chunk, segment or portion of an object may be used.

Current software object 231 may be the software or firmware object currently stored, used or executed by target device 220. For example in addition to the copy or instance of current software object 231 in storage system 230, current software object 231 may be stored in flash memory 223 in target device 220. Generally, current software object 231 may include executable code 125 that is executed by a controller 105 in target device 220, e.g., a set of programs that, when executed by controller 105, perform some or all the functions of target device 220, for example, functions of an ECU, an IoT device or any other device. Current software object 231 may be referred to herein as the old software.

Updated software object 232 may be an object that is, or that includes, updates or modifications for current software object 231, or updated software object 232 may simply be a replacement of current software object 231 (e.g., a binary image as referred to in the art). Updated software object 232 may be referred to herein as a new software object or as a software update object.

Patch element 233 may be a patch element or object that includes information usable to create a portion, part, chunk or segment of updated software object 232 based on current software object 231 or based on modified software object 239 (a modified version of current software object 231) as described. Generally, a patch file or patch element 233 may include information that is usable for generating a portion or part of updated software object 232 based on at least one of current software object 231 and modified software object 239. Otherwise described, a patch element 233 may be viewed as a recipe for generating a portion of updated software object 232 based on modified software object 239 or based on current software object 231. For example, a patch element 233 may include differences between a portion of modified software object 239 and a portion of updated software object 232 thus, given a patch element 233 and modified software object 239 (or current software object 231), a portion of updated software object 232 can be generated. Accordingly, update objects such as patch element 233, compressed patch portion 234 and compressed update portion 235 may be usable for generating parts (or all) of updated software object 232.

Generally, generating or creating a first object (e.g., generating or creating a patch element 232, a compressed update portion 235 or a compressed patch portion 234) based on second and third objects (e.g., based on updated software object 232 and based on modified software object 239) may include generating the content of the first object based on content in the second and third objects. For example, to generate a patch element 232 (first object) based on updated software object 232 and based on modified software object 239 (second and third objects) server 210 may compare data in updated software object 232 with data in software object 239 and record the differences between data in these two objects in patch element 232. It will be understood that, according to some embodiment of the invention and in a similar way, any object such as patch element 233, compressed patch portion 234 and compressed update portion 235 may be created based on content in one or more of current software object 231, updated software object 232 and/or modified software object 239. It will be understood that generating a first object based on second and third objects, e.g., generating a compressed update portion 235 based on updated software object 232 and modified software object 239, may include any operation or logic that, based on content or digital information in the second and third objects, calculates, determines, creates or generates digital information to be included in the first object.

Current software object 231 and updated software object 232 may be obtained by, or provided to, server 210. For example, a user or application may store current software object 231 and updated software object 232 in storage system 230 or server 210 may download current software object 231 and updated software object 232, e.g., from an OEM's database or web server. It will be understood that the scope of the invention is not limited by the way current software object 231 and updated software object 232 are obtained by server 210. Compressed patch portion 234 objects may be created by compressing patch element 233 objects. Compressed update portions 235 and/or compressed patch portions 234 may be created by compressing update portion object 238 objects. For example, updated software object 232 may be divided into update portion object 238 portions, segments, fragments or pieces such that each fragment is the size of a known, threshold, or predefined size and the update portion object 238 portions may be compressed to generate compressed update portions 235 objects and/or compressed patch portion 234 objects.

TCD 236 may be an object that includes information related to target device 220. For example, the block size used in a flash memory 223 of target device 220 may be recorded or included in TCD 236. For example, TCD 236 may include the amount of free or available space in RAM 222 and/or in flash memory 223 in target device 220 and/or TCD 236 may include the block size of flash memory 223 in target device 220 and so on. Specifically, the size of a lag buffer in target device 220 may be known to, or determined by, server 210, based in TCD 236. Any other information related to target device 220 may be included in TCD 236, e.g., a memory size (e.g., size or capacity of RAM 222 and/or of flash memory 223), computational capacity (e.g., type of CPU, CPU clock etc.) and network capacity (e.g., a network link speed or the speed with which target device 220 can receive data from a network), the size of memory in target device 220, the type of controller used, hardware version and the like. Update portion objects 238 may be portions of updated software object 232, e.g., uncompressed block size portions of updated software object 232.

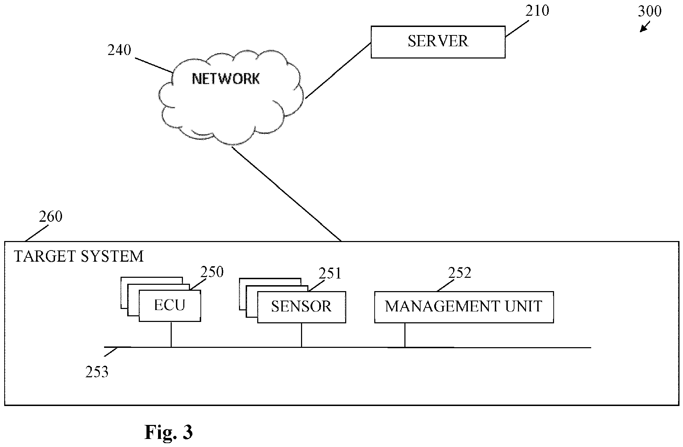

For the sake of simplicity, patch elements 233, compressed patch portions 234, compressed update portion 235 and update portion objects 238 may be referred to herein as update objects. For example, as described, each of patch elements 233, compressed patch portion 234, compressed patch portion, and update portion object 238 may be an update object that is usable for generating or creating a portion of updated software object 232 based on current software object 231, that is, by examining digital content in current software object 231 and the content of the update object, server 210 may calculate, determine and/or generate a portion of updated software object 232, e.g., an update portion object 238. Accordingly, in some embodiments, server 210 (or management unit 252 further described herein with reference to Fig. 3) uses an update object (e.g., patch elements 233, compressed patch portions 234, compressed update portion 235 and update portion objects 238) to generate a portion of updated software object 232. As further described, using an update object to generate a portion of updated software object 232 may include examining data in current software object 231 and/or examining data in modified software object 239. For example, content of a portion of updated software object 232 may be calculated based on an update object and further based on data in current software object 231 and/or data in modified software object 239.

As further described, server 210 (or management unit 252 further described herein with reference to Fig. 3) may create or generate update objects based on a modified version of current software object 231, e.g., update objects such as patch element 233, compressed patch portion 234 and compressed patch portion, may be created based on modified software object 239.

For example, a copy of current software object 231 may be made such that a modified version of current software object 231 is created or generated and maintained by modifying the copy. For example, at a first time or stage, modified software object 239 may be an identical copy of current software object 231 created by copying or duplicating current software object 231. Next, modified software object 239 may be created or modified by overwriting part of it with (using content in) an update object (e.g., an update portion object 238), accordingly, modified software object 239 may be viewed, and referred to herein, as a modified software object. As described, update objects, e.g., patch element 233, compressed patch portion 234 and compressed patch portion, may be created based on a modified version of current software object 231 and not based on current software object 231, e.g., based on modified software object 239. For example, patch elements 233, compressed patch portions 234 and/or compressed update portions 235 may be created by, or based on, comparing current software object 231 and modified software object 239 and recording (or including) differences between these two objects in patch elements 233.

Embodiments of the invention improve the relevant technological fields. For example, by taking distribution of data over blocks in a filesystem, embodiments of the invention enable generating and using a patch file that enables updating software in a target device by modifying or overwriting only specific blocks in a target filesystem.

Objects stored in storage system 230 as shown, e.g., current software object 231, updated software object 232, patch element 233, compressed patch portion 234, compressed patch portion and TCD 236 may be any suitable digital data structures, constructs or computer data objects that store or include digital information. For example, each of current software object 231, updated software object 232, patch element 233, compressed patch portion 234, compressed patch portion and TCD 236 may be, or may include, files, tables, entries in a database or any other digital information object or construct and thus may enable storing, retrieving and modifying digital information, e.g., values, strings and the like.

Embodiments of the invention may be related or relevant to any type of target device 220. For example, embodiments of the invention may be used to update ECUs in a car, train, aircraft, ship or any system or vehicle that lifts, carries or transports humans, livestock or cargo.

Reference is made to Fig. 3 that shows a system 300 according to illustrative embodiments of the present invention. As shown, system 300 may include server 210, target system 260 and network 240. Target device 260 may be any device (e.g., target device 220), system, vehicle or any other applicable entity. For example, target device 260 may be, or it may be included or embedded in, an IoT device or a vehicle, e.g., an aircraft, car train or ship. Although, for the sake of simplicity and clarity, vehicles such as cars are mainly described herein, other vehicles such as ships, trains and aircrafts are similarly applicable, it will be understood that the scope of the invention is not limited by the type, usage or nature of target device 220 and/or target system 260. For example, target system 260 may be, or it may be included in, a ship, airplane or car that includes an in-vehicle network 253, a management unit 252, one or more ECUs 250 and one or more sensors 251 (collectively referred to hereinafter as ECUs 250 and/or sensors 251 or individually as ECU 250 and/or sensor 251, merely for simplicity purposes). For example, a sensor 251 may be an oil pressure sensor, a temperature sensor and the like, e.g., when an embodiment is, or is included in a train or car or other vehicle. When an embodiment is included in an airplane, ship or spacecraft, an ECU 250 may be a line-replaceable unit (LRU), a lower line-replaceable unit (LLRU), a line-replaceable component (LRC), or a line-replaceable item (LRI) component. When an embodiment is included in an airplane, ship or spacecraft, a sensor 251 may be a unit that senses or measures, for example, elevation, acceleration, air speed or flow and the like.

Network 253 may be any suitable network that enables ECUs 250, sensors 251 and management unit 252 to communicate or exchange digital information. Network 253 may be, may include or may comprise any suitable network infrastructure and support any suitable protocol, e.g., Ethernet, CAN, IP, TCP and the like. Accordingly, numerous elements of network 253 are implied but not shown, e.g., routers, gateways etc. It will be recognized that embodiments of the invention are not limited by the nature of network 253.

Updating a remote or target device as described here may include updating software or firmware in one or more of ECUs 250, e.g., when target system 260 is target device 220. Although a flow that includes operations performed by server 210 is mainly described herein it will be understood that management unit 252 may act as the server. For example, provided with enough memory to store current software object 231 and updated software object 232, management unit 252 may be provided with current software object 231 and updated software object 232 and may perform the role of server 210 as described herein, e.g., simulate the state of flash memory 223 in one of ECUs 250, generate, store and send to the ECU, objects such as patch element 233, compressed patch portion 234, compressed patch portion etc.

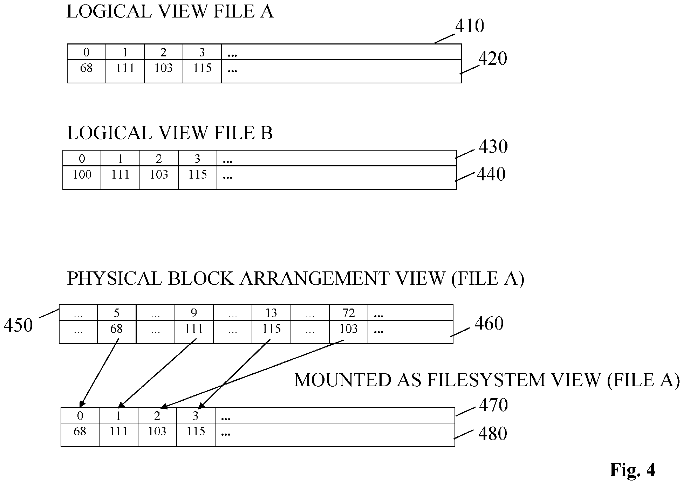

Reference is made to Fig. 4 illustrating views of a content object, e.g., a file or a filesystem that may be, or may include, current software object 231, modified software object 239 or updated software object 232. As shown by offsets or indices 410 and data blocks 420 (that are the actual data or payload in offsets 410), a logical view includes (or is) an arrangement of data portions (bytes, blocks etc.) according to an intended or defined order. For example, using the American Standard Code for Information Interchange (ASCII) table, the 420 sequence of block data 68, 111, 103 and 115 (file A) is, or spells, when arranged according to a logical order, "Dogs" and similarly, when logically arranged, the 440 sequence of values 100, 111, 103 and 115 in offsets 430 (file B) is "dogs". As shown by data portions or blocks 460 pointed to by offsets or indices 450, when file A is stored in a storage device or system (e.g., in storage system 130), the physical or actual order or arrangement of the data blocks (as represented by offsets 450, e.g., from the beginning of a filesystem in server 210) may be different from the logical order.

It will be understood that the data (actual data or payload) and offsets or indices shown in Fig. 4 and described herein are brought as a simplified example for explanatory purposes. For example, instead of the offsets shown in Fig. 4, offsets may be 512, 1024, 1536 pointing to 512 byte blocks of data that store more than a single value as shown by 420. Accordingly, it will be understood that methods and embodiments described herein may be applicable to any partitioning, block size, segments or data portions used by a storage device.

An embodiment may logically, at file level, compare first and second files. As described, logical or file based compare may compare first and second files or objects according to a predefined, known or intended logical order. For example, server 210 or management unit 252 may logically compare current software object 231 (e.g., file A in Fig. 4) with updated software object 232 (e.g., file B in Fig. 4), determine and/or record that the difference between them is that file A has 68 ("D" in ASCII) in the first ("0") logical offset and file B has 100 ("d" in ASCII) in the first ("0") offset. Accordingly, to modify file A so that it same as file B, a system or method needs to access the block that stores the value in logical offset 0 of file A, however, as illustrated in Fig. 4, that value is stored in offset 5 in a filesystem or storage system (e.g., when file A is stored in storage system 130).

Moreover, assuming that file A is or includes an image currently used by a target system (e.g., it is current software object 231), a logical or file based compare does not readily provide offsets in the image that need to be modified such that current software object 231 is updated to become updated software object 232. For example, while the difference between files A and B in the above example is in logical block "0" the block that may need changing, on a filesystem of a target system, in order to update from an image in file A to an image in file B, may be in offset "17".

An embodiment may mount a file such that it is accessible as a file system. For example, server 210 or management unit 252 may determine the size (e.g., in bytes) of file A and create an empty, clean or formatted filesystem file (e.g., using the mkfs Linux utility, a special file is created on storage system 130), such that the created (clean) filesystem file has the capacity to include the content of file A. An embodiment may then mount the created filesystem file (e.g., using the Linux mount command) on a mount point, and the embodiment may then sequentially (e.g., using the dd Linux utility or cp command), according to their logical order, copy blocks or portions of file A (e.g., file A is current software object 231) to the created and now mounted filesystem, e.g., via the mount point. Thus, the filesystem file includes blocks or portions of file A which are physically arranged, ordered or placed, according to their logical order in file A. As further described, a sequential order described herein is only one of many mapping functions, orders or logics according to which blocks may be physically arranged in an update object, based on their respective logical order.

In some embodiments, an initial, empty, clean or formatted filesystem may be created, e.g., when an initial image or software package is created, the initial filesystem may be reused. For example, instead of creating or recreating additional filesystems as described, the initial filesystem may be copied and used or reused for identifying blocks that need changing as described herein.

Assuming that to create an initial image (e.g., current software object 231), an embodiment sequentially, according to their logical order, or according to another, known or predefined order, copied blocks or portions of file A to a filesystem created and mounted as described, by repeating the steps for creating the initial image, an embodiment may be able to recreate an exact copy of the image currently used by a target system. The terms "data block", "data blocks", "data segment" and "data portions" as used herein may mean the same thing and may be used herein interchangeably. For example, a data block may be any number of bytes used by a storage or operating system, e.g., a data block, segment or portion may be 512 bytes.

Accordingly, using a known, predefined mapping between a logical order and an order according to which data blocks are placed or arranged in an image, an embodiment may readily identify the physical locations or offsets, in an image, which need modifying in order to create an update object based on first and second files or images.

For example, when the mapping function is the simplified case of "logical block 0 is mapped to physical block 0, 1 to 1" and so on, in the above "Dogs" vs. "dogs" example, an embodiment may determine that the only block that needs to be overwritten or modified in the image stored in target device 220 is block "0". Of course, any number of blocks that need to be modified can be identified.

To create an update object an embodiment may create a patch file that causes a target system to update a set of blocks in its filesystem, or an embodiment may send, to a target device, one or more blocks identified as described and inform the target device of the physical or actual offsets to which the blocks sent are to be written. In some embodiments, an entire new, updated image may be created and sent, as an update object, to a target system.

For example, an embodiment may apply at least one modification to the content in a mounted file or filesystem according to the at least one offset that is determined by a logical or file based comparison as described. For example, in the above example, to create an updated image or software object 232, an embodiment may overwrite the "D" in offset "0" in a mounted filesystem (that includes file A) with a "d" to thus create, in the mounted filesystem (and thus in the mounted file), an updated image or updated software object 232. The resulting updated software object 232 may be sent or otherwise provided to one or more target devices.

In some embodiments, possibly after the created and mounted filesystem has been unmounted (e.g., using the unmount Linux command) the file created by the mkfs command as described may be copied (e.g., using the dd command) to a flash device usable for updating or it may otherwise be provided, e.g., as updated software object 232, to target device 220.

An embodiment may identify, as described, offsets of blocks or portions of any part of an image used by a target device that need to be modified, for example, blocks in a filesystem of target device 220 that store hash values (e.g., used for providing security, authentication and/or validation of data and the like), filesystem data (e.g., a super block) and the like. Accordingly, an embodiment may create an updated image by identifying and/or modifying not only blocks that store executable code (e.g., used by a controller 105 in an ECU 250) but also blocks that include filesystem data or metadata, security or protection data and the like.

It will be noted that any physical order or arrangement (not only a sequential order as described herein) may be used. For example, when creating current software object 231, an embodiment may perform the steps described herein however, when copying file A to a clean mounted filesystem, an embodiment may skip some of the blocks in the mounted filesystem (or store in these blocks a predefined value), e.g., to leave or reserve blocks or space for later quick updates that may include writing data to the reserved blocks. Information related to order or placement of bocks in a filesytem provided to target device 220 may be stored in TCD 236. Accordingly, using information in TCD 236, an embodiment may create, e.g., in a memory of server 210, an exact duplicate or clone of an image and/or filesystem currently used by target device and use such image and/or filesystem (e.g., when mounted as described) to create an updated software object 232. A patch or delta file may be created. For example, in the above example, a patch file sent to target device may include information that causes a controller 105 in target device 220 to replace the "D" with a "d".

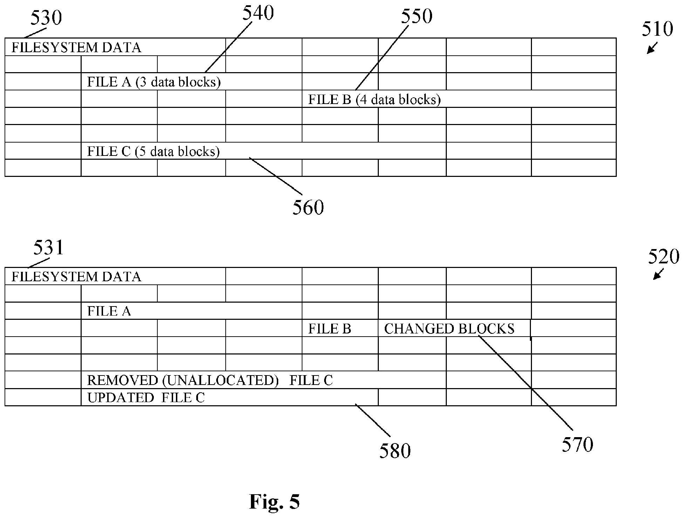

Reference is made to Fig. 5, a graphical illustration of arrangement of data blocks in a DO according to some embodiments of the present invention. DO 510 may be an image that is an exact duplicate of an image used by a target device, e.g., DO 510 is current software object 231. For example and as shown, DO 510 may be, or may include, a filesystem (e.g., implemented based on filesystem data 530) in which three files are included, e.g., file A 540 including three blocks of data, file B 550 including four blocks of data and file C including five blocks of data. For example, files A, B and C may include software or logic related to three different operations performed by a target device 220 or these files may include software or logic related to three different components included in a target device 220.

In an exemplary case, an update of current software object 231 to updated software object 232 includes a change of two blocks of file B 550. For example, by logically comparing files A, B and C in current software object 231 with files A, B and C to be included in updated software object 232, an embodiment may determine that files A and C are to be same or identical in both objects but file B has been changed.

An embodiment may readily and quickly identify data blocks that need to be changed, on a target device, in order to update the target device from current software object 231 to updated software object 232. For example, after mounting current software object 231, file B may be changed or updated therein such that it includes changed blocks 570. Next, possibly after unmounting (now modified) current software object 231, the resulting file and a file containing the original (unmodified) current software object 231 may be compared to discover that the only difference is in changed blocks 570. Accordingly, in the above example, an update procedure may involve replacing blocks 570 in the target device. Accordingly, an update procedure may be optimized by only replacing or modifying specific blocks of a specific file.

In another example, e.g., assuming substantial modifications have been made to file C 560, an embodiment may delete or remove file C 560 (e.g., mark in filesystem data 531 the blocks containing file C as unallocated), and write a new file C 580 to DO 520. For example, to replace file C, a pointer in filesystem data 531 or in a jump table to file C may be set such that it points to new file C 580. In such case, an update procedure may include updating one or more data blocks containing filesystem data, e.g., update from filesystem data 530 to filesystem data 531 and writing blocks that include a new file, e.g., blocks containing file C 580.

Various techniques may be used for identifying blocks of data to be modified or replaced. For example, having mounted an initial or original current software object 231 and modified it as described to produce a file that includes a modified current software object 239, the file including the modified object 239 may be compared, e.g., logically or block by block, to a file containing the original or initial object 231 thus, the blocks that need to be changed may be readily and efficiently identified.

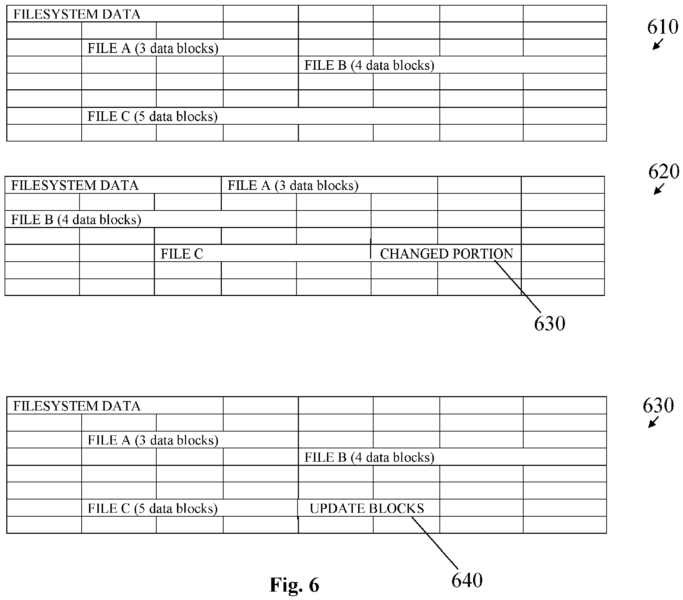

Reference is made to Fig. 6, a graphical illustration of arrangement of files in an image or binary according to some embodiments of the present invention. For example, DO 610 may show or represent a view of an image file when mounted using the Linux mount command, e.g., DO 610 may be the content of current software object 231 when viewed as a filesystem, e.g., following a mount of a file containing current software object 231 at a mount point. Similarly, DO 620 may be a filesystem view of an updated image file, e.g., a view of updated software object 232 when mounted as described. A copy of current software object 231 may be made and kept for future use as described herein, such copy may be referred to herein as original current software object 231.

As shown, while, with respect to DO 610, files A and B have been moved in DO 620, they were are left unchanged. As further shown, at a logical level, in the simplified example shown in Fig. 6, file C has been changed, accordingly, an update from current software object 231 to updated software object 232 only requires updating a portion of file C. However, in the example shown in Fig. 6, if the files containing current software object 231 and updated software object 232 are compared (e.g., block by block or otherwise), many differences will be found, even if the relevant files are left unchanged. For example, since as shown by object 610, the offset in current software object 231 where file A is stored or placed includes file B in updated software object 232 (as shown by object 610). Embodiments of the invention may solve this problem as further described.

In some embodiments, first and second files containing images or software packages may be mounted, e.g., as illustrated in Fig. 6, files containing current software object 231 and updated software object 232 may be mounted and viewed as objects 610 and 620 respectively. Next, a logical compare of files in the images may be performed. For example, an embodiment may read (or extract) file A from object 610, read (or extract) file A from object 620 and compare these two files, e.g., to find they are same or identical. Staying with the example shown in Fig. 6, when comparing file C in object 610 to file C in object 620, changed portion 630 may be detected. It is noted that a logical, file-based compare as described is agnostic to the location (or block arrangement) of the compared files in a filesystem, accordingly, a logical, file-based compare of files using a filesystem may detect differences in files' content, regardless of how the files are arranged in a filesystem.

In some embodiments, having detected a difference between files in mounted images as described, a file in mounted current software object 231 may be changed according to the difference. For example, based on identifying changed portion 630, file C in mounted current software object 231 (object 610) may be accessed and changed by replacing some of its original content with update blocks 640. Next, the file containing modified current software object 231 (object 630) may be unmounted and may be compared to the original (unmodified current software object 231 kept as described). For example, a byte by byte or block by block compare of the file containing modified current software object 239 and the file containing unmodified (or original) modified current software object 231 may reveal that the only difference between the files is in updated blocks 640. Accordingly, an embodiment may identify the minimal change required in order to update a target device from a current software to an updated software. Specifically, using a combination of logical, file-based compare (to find differences in actual data in a file) with a block based compare of files that are manipulated as filesystems, embodiment may exclude or avoid changes that result from relocation of files in a filesystem or changes resulting from a distribution (or redistribution) of blocks or portions of files in a file system.

A patch file or other technique may be used to create an update package based on blocks or portions identified as described, e.g., based on update blocks 640.

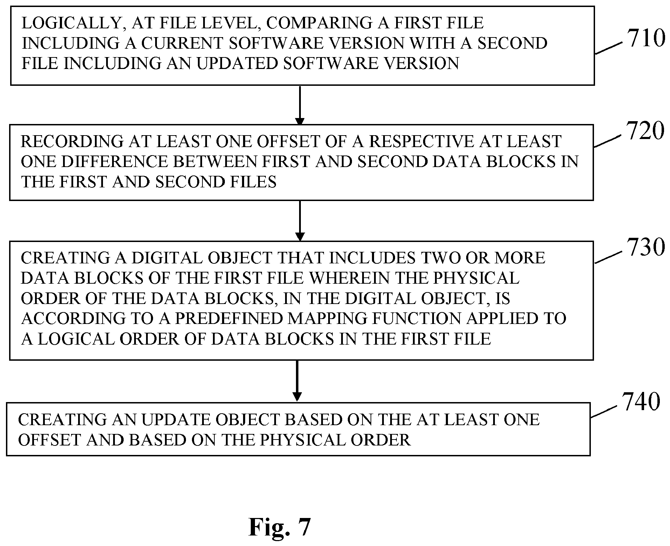

Reference is made to Fig. 7, a flow of a method according to illustrative embodiments of the present invention. As shown by block 710, first and second files may be logically, or file-based compared. For example, the Beyond Compare utility may be used to compare files A and B or updated software object 232 and current software object 231 stored in storage system 130. As shown by block 720, at least one difference between logically compared files may be recorded, e.g., offsets of logical blocks where differences where found may be stored in memory 120.

As shown by block 730, a DO may be created such that it includes two or more data blocks that are same or identical to respective logical blocks in a file. As further shown by block 530, the physical order of the data blocks, in the DO, may be according to a predefined mapping function applied to the logical order of data blocks in the file. For example, by creating a file, mounting the file as a filesystem and then copying logical blocks of file A to specific offsets in the now mounted file, e.g., viewed as a filesystem, an embodiment may place data in logical blocks of file A according to any actual or physical offset in the mounted file. It is noted that although mounting a file as a filesystem is mainly described herein, other techniques may be used. For example, an embodiment may allocate a contiguous set or sequence of blocks in storage system 130 and use the set of contiguous blocks as the DO described herein, e.g., write data in logical blocks of file A to specific, determined by a mapping function, offsets in the set of contiguous blocks. For example, as illustrated by the arrows connecting blocks 460 with offsets 470, assuming the mapping function is "logical block X is copied to physical block X", an embodiment may copy blocks at offsets or addresses 5, 9 13 and 72 to respective blocks at offsets 0, 1, 2 and 3 as shown.

As shown by block 740, an update object may be created based on the recorded offsets and based on the physical order or arrangement of the blocks in the DO. For example, based on the recorded (logical) offsets 8, 13 and 17, an embodiment may modify blocks 8, 13 and 17 (first predefined mapping function) in a file mounted as a filesystem as described, or an embodiment may modify or overwrite blocks 16, 26 and 34 (second predefined mapping function) in a file mounted as a filesystem as described. For example, in the case current software object 231 includes a Linux filesystem, filesystem data such as filesystem inodes may be placed in blocks from offset 0 to offset 2, accordingly, a mapping function (e.g., executed by controller 105 when executing a Linux kernel or driver in executable code 125) may add 3 to the logical offsets of blocks, e.g., blocks in logical offsets 8, 13 and 17 of a file may be copied to offsets 11 (8+3), 16 (13+3) and 20 (17+3) in a file mounted as a filesystem as described.

A modified file as described may be, or may include an update object, e.g., it may be sent to a target device to used as current software object 231 by target system 260. An update object may be a patch file as described or an object that includes a set of data blocks, e.g., ones that need to be overwritten in order to update an image in target device 220 from current software object 231 to updated software object 232.

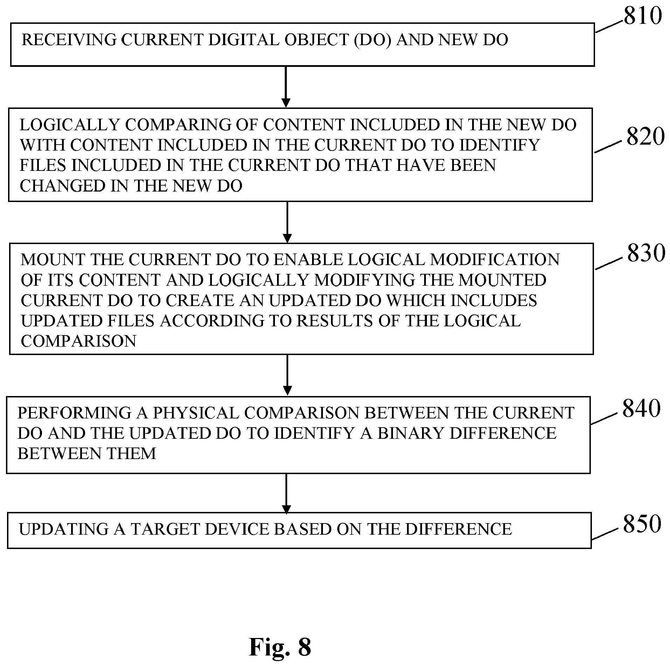

Reference is made to Fig. 8, a flow of a method according to illustrative embodiments of the present invention. As shown by block 810, an embodiment may receive current and new (or updated) DOs. For example, current and new DOs may be current software object 231 and updated software object 232 respectively, e.g., the new DO includes updates to one or more files included in the current DO. A DO as referred to herein may be any relevant or suitable digital object, e.g., a DO may be a file that includes software, firmware, files, filesystem, code, bootloader code, system partitioning data or structure and the like. For example, a DO may be an object (e.g., an image or binary as known in the art) that can be stored on a flash or other storage in a target device 220 and may include any (or even all) data required by the target device in order to properly function.

As shown by block 820, content (e.g., files) included in the current DO may be logically compared with content (e.g., respective files) in the new DO. For example, a logical comparison of files, performed by an embodiment, may be carried out using various variations of the diff command (e.g., diff -r). For example, assuming the current and new DOs each include files A, B and C and further assuming that files A and C are same in both DOs but file B in the new DO has been changed with respect to file B in the current DO, e.g., last modification to file B was made to fix bugs or add features. In such case, a logical comparison as shown by block 820 would identify that file B has been changed.

In some embodiments, possibly in addition to identifying differences between files as described, files included (or existing) in one of current DO and missing in new DO (and vice versa) may be identified. Accordingly, modifying a mounted DO as described (e.g., modifying mounted current DO as shown by block 830) may include writing files to the mounted DO (e.g., in the case where a file found in new DO is not included in current DO) and/or removing files (e.g., in the case where a file found in current DO is not included in new DO).

In some embodiments, a logical comparison as shown in block 820 and described herein may ignore (or skip) some files, data or metadata included in the compared DOs. For example, during a logical comparison which may be content aware, an embodiment can selectively avoid comparing sections, blocks or portions of DOs where metadata such as modification time of files since such information may be irrelevant for an update procedure and/or may be ignored for other reasons. For example, portions of filesystems 530 and 531 may be skipped in a logical comparison as described.

As shown by block 830, the current DO may be mounted to enable logical modification of its content and an embodiment may logically modify the mounted current DO to create an updated DO which includes updated files according to results of the logical comparison. For example, staying with the above example, after mounting current DO, an embodiment may modify file A (in the now mounted current DO) according to the logical comparison so that file A (in the mounted current DO) is same or identical to file A in the new DO. It is noted that when modifications are made to a mounted DO, the modification are applied to the actual DO. Of course, more than one file may be identified as changed in the comparison shown in block 820 and more than one modification may be made to more than one file as shown by block 830.

In some embodiments, a DO may contain data related to security or integrity of content, e.g., hash or other values calculated using a hashing mechanism (e.g., using a dm-verity like method). Some embodiments may update or modify such security or integrity related content. For example, upon modifying a file to create an updated DO as shown by block 830, an embodiment may calculate (or recalculate) a new hash value for the modified file and store the new hash value in the updated DO. Accordingly, when a physical comparison is performed as shown by block 840, such modifications to security or integrity data may be identified and included in an update object, e.g., a patch file.

As shown by block 840, a physical comparison between the current DO and the updated DO may be performed to identify a binary difference between the current and updated DOs. For example, binary difference may be identified and recorded using a block by block (block-wise) compare of the current and updated DOs. It is noted that any block size may be used when performing a physical comparison between the current and updated DOs, that is, a physical comparison may compare blocks of (that include) any number of bits or bytes. For example, using a block size of 256, an embodiment may compare the first 256 bytes (bytes 0 to 255) in current DO with the first 256 bytes in updated DO (first block) then compare bytes 256 to 511 in these DOs and so on.

As described, a physical comparison may detect any difference between compared DOs, e.g., applying a physical comparison (that can be according to any resolution, e.g., byte by byte or block by block) an embodiment may identify differences related to hash values or other metadata and such differences may be taken into account when creating an updated or new DO or a patch file as described.

As shown by block 850, a target device may be updated based on the identified binary difference. For example, a patch file may be created based on blocks in which differences were found as described. For example, blocks in updated DO which are not same or identical to respective blocks in current DO may be sent to target device 220 where they may be written to flash 223 thus efficiently updating target device 220 by only sending to target device 220, and writing to flash 223, a minimal, small number of data blocks.

An embodiment may automatically select the block size in a physical comparison and/or generation of a patch file. For example, if, based on TCD 236 it is determined that the block size of flash 223 is 512 bytes then this block size may be used to identify differences between blocks in updated and current DOs, in another case, to reduce the number of writes to a flash in a target device, large block size may be selected and, in yet another case, to reduce memory consumption, small block size may be selected.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

## Claims

1. A method of creating a software update object, the method comprising:
logically, at file level, comparing (710) a first file including a current software version (231) with a second file including an updated software version (232);
recording (720) at least one offset of a respective at least one difference between first and second data blocks in the first and second files;
creating (730) a digital object that includes two or more data blocks of the first file wherein the physical order of the data blocks, in the digital object, is according to a predefined mapping function applied to a logical order of data blocks in the first file; and
creating (740) an update object based on the at least one offset and based on the physical order.

2. The method of claim 1, wherein creating (740) the update object includes:
selecting, based on one or more recorded offsets, one or more blocks of the digital object; and
including the selected blocks in the update object.

3. The method of claim 1, wherein creating (740) the update object includes:
mounting the first file such that it is accessible as a file system; and
applying at least one modification to the content in the mounted first file according to the at least one offset.

4. The method of claim 1, comprising, providing the update object as an updated software package to a target device.

5. The method of claim 3, comprising, unmounting the first file.

6. The method of claim 1, where a recorded offset is related to a difference between one of:
payload in the first and second files,
file system level data, and
cyber security information.

7. A system for creating a software update object, the system comprising:
a memory (120); and
a controller (105) configured to:
logically, at file level, compare (710) a first file including a current software version (231) with a second file including an updated software version (232);
record (720) at least one offset of a respective at least one difference between first and second data blocks in the first and second files;
create (730) a digital object that includes two or more data blocks of the first file wherein the physical order of the data blocks, in the digital object, is according to a predefined mapping function applied to a logical order of data blocks in the first file; and
create (740) an update object based on the at least one offset and based the physical order.

8. The system of claim 7, wherein creating (740) the update object includes:
selecting, based on one or more recorded offsets, one or more blocks of the digital object; and
including the selected blocks in the update object.

9. The system of claim 7, wherein creating (740) the update object includes:
mounting the first file such that it is accessible as a file system; and
applying at least one modification to the content in the mounted first file according to the at least one offset.

10. The system of claim 7, wherein the controller is further adapted to provide the update object as an updated software package to a target device.

11. The system of claim 7, where a recorded offset is related to a difference between one of:
payload in the first and second files,
file system level data, and
cyber security information.
